# EUROPÄISCHE PATENTANMELDUNG

(11) **EP 1 878 698 A2**
(43) Veröffentlichungstag der Anmeldung: **16.01.2008**
(21) Anmeldenummer: 07112290.7
(22) Anmeldetag: 11.07.2007
(51) Int. Cl.: C01B 13/36, C01F 17/00, C01G 5/00, C01G 33/00, C01G 35/00, C01G 53/04

(54) **Hydrothermales Verfahren zur Herstellung von nano- bis mikroskaligen Partikeln**

(30) Priorität: 13.07.2006 DE 102006032590
(71) Anmelder: H.C. Starck GmbH, 38642 Goslar (DE)
(72) Erfinder: Puppe, Lothar, 51399 Burscheid (DE); Kijlstra, Johan, 51519 Odenthal (DE); Weber, Ralph, 42799 Leichlingen (DE); Rieder, Michaela, 40764 Langenfeld (DE); Storch, Dirk, 51065 Köln (DE)
(74) Vertreter: Clauswitz, Kai-Uwe Wolfram

(57) **Zusammenfassung**

Die vorliegende Erfindung betrifft ein Verfahren zur Herstellung von nano- bis mikroskaligen Partikeln von Verbindungen der Seltenerd- und anderen Übergangsmetallen sowie zur Herstellung von kolloid-chemisch stabilen Solen dieser Partikel.

## Beschreibung

Die vorliegende Erfindung betrifft ein Verfahren zur Herstellung von nano- bis mikroskaligen Partikeln von Verbindungen der Seltenerd- und anderen Übergangsmetallen sowie zur Herstellung von kolloid-chemisch stabilen Solen dieser Partikel.

Die Fällung und Cofällung von Metallionen aus der wässrige Phase sind seit langem bekannte Verfahren zur Synthese und Produktion von anorganischen und mikroskaligen Partikeln für z.B. Pigmente, Katalysatoren und keramische Materialien. Bei der industriellen Produktion werden diese Verfahren hauptsächlich zur Herstellung von (sub-)mikroskaligen Partikeln, d.h. mit Partikelgrößen größer 100 nm eingesetzt. Wichtige Produktkriterien stellen u.a. die Morphologie, die mittlere Partikelgröße, die Partikelgrößenverteilung und die Verarbeitungseigenschaften der Partikel dar.

Abhängig vom Stoffsystem können auch nanoskalige Partikel, d.h. solche mit Partikelgrößen 100 nm über Fällungsverfal3ren hergestellt werden. Die nass-chemische Herstellung von nanoskaligen Partikeln gestaltet sich jedoch schwieriger als die von mikroskaligen Partikeln so dass bisher nur eine begrenzte Zahl von nanoskaligen Partikeln nass-chemisch über Fällungsverfahren industriell produziert werden kann (z.B. SiO₂, TiO₂ und Fe₂O₃). In der Regel haben diese Verfahren nur eine begrenzte Möglichkeit, die Partikelgröße zu variieren (vgl. bei SiO₂-Partikeln DE-A 4218306).

Man unterscheidet heterogene und homogene Fällungsverfahren. Bei einem heterogenen Fällungsverfahren führt die Mischung von zwei Edukten zu einer sofortigen Partikelbildung. Bei einer homogenen Fällungsreaktion werden die Partikel in einer homogenen Lösung gebildet. In diesem Fall kann die Partikelbildung z.B. durch:
- Zersetzung von gelösten Metallkomplexen,
- Zwangshydrolyse von gelösten und mit Wassermolekülen komplexierten Metallionen oder
- kontrollierte homogene Freisetzung von Fällungsreagenzic:n durch Zersetzung von organischen Molekülen
gegebenenfalls unter thermischer Belastung induziert werden.

Ein bekanntes heterogenes Fällungsverfahren zur Herstellung von mikroskaligen Partikeln seltener Erdmetallverbindungen stellt die Fällung aus den entsprechenden Metallsalzlösungen mit ammoniakhaltigen Lösungen dar (M.D. Rasmussen, M. Akinc, O. Hunter, Ceramics International 1985, 11,2, 51-55). Mit solchen basischen Lösungen als Fällungsreagenz entsteht in der Regel ein Hydroxid, das durch Kalzinierung in ein Oxid umgewandelt werden kann.

Ein bekanntes Verfahren zur Herstellung von mikroskaligen Partikeln von Metallverbindungen stellt die homogene Fällung aus Metallsalzlösungen bei erhöhter Temperatur dar. Die erhöhte Temperatur führt zu Zwangshydrolyse der gelösten Metallionen und damit zur Partikelbildung. Matijevic (Langmuir, 1986, 2, 12-20; Acc. Chem. Res. 1981, 14, 22-29; Ann. Rev. Mater. Sci.; 1985; 15, 483-516) beschreibt wie man dieses Verfahren in Batchfahrweise zur Herstellung von mikroskaligen oxidischen und hydroxidischen Partikeln einsetzen kann.

Ein bekanntes Verfahren zur Herstellung von mikroskaligen Metall(hydr)oxidpartikel basiert auf der thermischen Zersetzung von löslichen Metall-Chelaten in Natronlauge unter hydrothermalen Bedingungen. Sapieszko (Journal of Colloid Interface Science, 1980, 74, 2, 405-422) und Matijevic (Acc. Chem. Res. 1981, 14, 22-29; Langmuir 1986, 2, 12-20) beschreiben wie man dieses Verfahren in Batchfahrweise zur Herstellung von mikroskaligen Partikeln mancher Metall(hydr)oxide einsetzen kann.

Eine Eignung dieser beiden letzten Verfahren zur Herstellung von Partikeln seltener Erdmetallen wurde bisher nicht beschrieben.

Ein weiteres bekanntes Batch-Verfahren zur Herstellung von monodispersen mikroskaligen Partikeln ist die homogene Fällung von Metallverbindungen in harnstoffhaltigen Metallsalzlösungen. Erhitzung der wässrigen Lösung führt zu einer thermisch induzierten Hydrolyse des Harnstoffs und damit zur homogenen Freisetzung von Fällungsreagentien (Ammoniak und CO₂), welche zur Bildung von basischen, carbonat-haltigen Verbindungen des Metalls führen. Durch Kalzinierung können diese Verbindungen in die entsprechenden Oxide umgewandelt werden. Die Anwendung dieses Verfahrens auf die Herstellung von mikroskaligen und submikroskaligen Partikeln seltener Erdmetallen wurde von Akinc und Sordelet (Advanced Cerarmic Materials,1987, 2 (3A) 232-38E), Matijevic und Hsu (Journal of Colloid and Interface Science 1987,118, 2, 506-523) und Sordelet und Akinc (Journal of Colloid and Interface Science 1988,122, 1, 47-59) beschrieben. Die Methoden arbeiten bei niedriger Eduktkonzentration, in der Regel unterhalb 50 mM, da bei höheren Konzentrationen die Partikel zur Agglomeration neigen.

Durch eine weitere Senkung der Eduktkonzentration sind mit dieser Methode laut Sohn et al. (Powder Technology 2004, 142, 136-153) auch nanoskalige Partikel von Yttriumverbindungen, jedoch nicht kleiner als 50 nm, erhältlich. Durch Zusatz von Komplexbildner wie EDTA kann eine ähnliche Reduzierung der Partikelgröße erreicht werden (M. Kobayashi, Journal of Materials Science Letters,1992, 11, 767-768).

EP-A 842 899 und US-A 2002/0017635 beschreiben homogene Fällungsverfahren (BatchFahrweise) mit Harnstoff als Fällungsreagenz zur Herstellung von sphärischen Partikeln seltener Erdmetallen mit einer Partikelgröße zwischen 0,2 und 2,0 µm.

Die Batchsynthese von anorganischen Partikeln nach dem homogenen Fällungsverfahren mit Harnstoff als Fällungsreagenz hat verschiedene Nachteile:
- Submikro- und nanoskalige Partikel sind nur bei sehr geringen Edukt/Produkt-Konzentrationen erhältlich, wobei der Feststoffgehalt deutlich unterhalb von 5 g/l liegt
- Nanoskalige Partikel mit Partikelgrößen von weniger als 50 nm sind nicht erhältlich
- Bei höheren Eduktkonzentrationen tritt Partikelagglomeration auf.
Nur bei hohem, ca. 20fachem Hamstoff-Überschuss nähert sich die Ausbeute 100 % (s. z.B. Sordelet und Akinc, Journal of Colloid and Interface Science 1988,122, 1, 47-59).

US-A 6596194 beschreibt die Batch-Synthese von nanoskaligen (< 10 nm) oxidischen Partikeln seltener Erdmetalle (u.a. von Phosphoren) in Lösemitteln mit gelösten oberflächenaktiven Substanzen, die bevorzugt Komplexe mit Metallionen bilden können. EP-A 0 684 072 beschreibt ein Batch-Verfahren zur Herstellung von nanoskaligen Partikeln (< 10 nm) von seltenen Erdmetallen und deren Kombination mit anderen Metallen in wässrigen Medien. Das Verfahren beinhaltet eine Fällung von gelösten Metallkationen aus einer Lösung mit einer Konzentration von mehr als 0,1 mol/l durch Zusatz einer ammoniakhaltigen Lösung, Abtrennung und Trocknung des Feststoffes mit einer anschließenden Redispergierung in demineralisiertem Wasser. WO-A 01/38225 beschreibt ein Batch-Verfahren zur Herstellung von nanoskaligen Partikeln von seltenen Erdmetallen in wässrigen Medien mit Hilfe von Komplexbildner wie z.B. Zitrat. Das Verfahren beinhaltet eine Fällung der gelösten Metallkationen (Konzentration > 0,1 M) durch Zusatz von ammoniak-haltigen Lösungen bei Raumtemperatur mit einer anschließenden hydrothermalen Behandlung. Die Größe der resultierenden Partikel liegt zwischen 2 und 5 mn.

Gemäß EP-A 0 684 072 und WO-A 01/382225 ist jedoch keine Variation und Anpassung der Partikelgröße durch Verfahrensmodifikation möglich. Die Herstellung von nanoskaligen Partikeln mit einer Partikelgröße oberhalb 10 nm wird nicht beschrieben.

US-B 6719821 und US-A 2004139821 beschreiben die Batch-Herstellung von nanoskaligen Pulvern der Seltenerdmetalle über nasschemische Fällung mit Ammoniak als Fällungsreagenz. Die XRD-Kristallitgröße der kalzinierten Proben ist kleiner als 20 nm. Über die Größe der Primärpartikel sowie über die Redispergierbarkeit nach Kalzinierung wird keine Aussage gemacht.

Bei allen vorangehend genannten Verfahren handelt es sich unter anderem um Batch-Verfahren. Die diskontinuierliche Reaktionsführung dieser Batch-Verfahem ist jedoch insbesondere im Hinblick auf Effizienz für eine großtechnische Anwendung nachteilig.

US-A 5652192 und WO-A 94/01361 beschreiben ein hydrothermales Verfahren zur kontinuierlichen und homogenen Fällung von nanoskaligen Partikeln. Beispiele dieses kontinuierlichen hydrothermalen Verfahrens beschreiben auch Matson et al. (Particulate Science and Technology, 1992, 10, 143-154) und Darab et al. (Journal of Electronic Materials, 1998, 27, 10). Zur Partikelproduktion wird eine wässrige Metallsalzlösung, welche möglicherweise weitere thermisch-reaktive Komponenten beinhaltet, durch verschiedene funktionelle Einheiten, d.h. einen beheizten Kapillarreaktor und eine gekühlte Kapillare (oder Wärmetauscher) hintereinander gepumpt. Hinter der gekühlten Kapillare fließt die Nanopartikel-haltige Dispersion durch ein Druckventil und eine Austrittskapillare in einen Sammelbehälter. Die Verweil- bzw. Reaktionszeiten werden durch die Einstellung der bevorzugt konstanten Volumenströmung und der Dimensionen der funktionellen Einheiten (Durchmesser, Länge) bestimmt. Die Kapillardimensionen werden so gewählt, dass die Temperatur der strömenden Flüssigkeit unverzögert die Temperatur der funktionellen Einheit übernimmt. Die gezielte Einstellung von Verweil- und Reaktionszeiten, Temperatur und Druck soll die kontinuierliche Herstellung von Partikeln mit steuerbarer Partikelgrößenverteilung ermöglichen. Bei kurzen Reaktionszeiten von typischerweise weniger als 60 s sind unter hydrothermalen Reaktionsbedingungen Nanopartikel erhältlich. US-A 5652192 und WO-A 94/01361 beschreiben den Einsatz von gelösten Substanzen wie z.B. Harnstoff, die sich bei thermischer Belastung zersetzen und Fällungsreagentien homogen freisetzen. Dieses kontinuierliche, hydrothermale Hamstoffverfahren ist jedoch für die wirtschaftliche Produktion von kolloid-chemisch stabilen Dispersionen von nanoskaligen Partikeln, insbesondere deren großtechnische Produktion nicht geeignet, da es wesentliche Nachteile wie z.B.
- die geringe Ausbeute der Reaktion (< 50 %)
- die geringe Standzeit des Verfahrens (im Minutenbereich) wegen Kapillarverstopfung und
- die mangelhafte kolloidale Stabilität der Produktdispersion
aufweist. Ein weiterer Nachteil betrifft den niedrigen pH-Wert des erhaltenen Produktsols, der unterhalb von pH = 6 liegt. Ein solcher, saurer pH-Wert ist ungünstig für die Weiterverarbeitung bestimmter Produkte, wie z.B. solchen der seltenen Erdmetallverbindungen. Die erzeugten Seltenerdpartikel lösen sich unter diesen Bedingungen relativ schnell wieder auf, was somit eine rasche Aufbereitung dieser Produkte notwendig machen würde.

Es bestand daher weiterhin Bedarf nach einem Verfahren zur nasschemischen Herstellung nanoskaliger bis mikroskaliger Partikel von Verbindungen der Seltenerd- und anderen Übergangsmetallen sowie zur Herstellung von kolloid-chemisch stabilen Solen dieser Partikel, welches die vorangehend aufgeführten Nachteile nicht aufweist.

Die Aufgabe der vorliegenden Erfindung bestand daher darin, ein Verfahren insbesondere ein kontinuierliches Verfahren zur Herstellung von nanoskaligen bis mikroskaligen Partikeln von der Verbindungen der Seltenerd- und anderen Übergangsmetallen, bereitzustellen, welches höhere Standzeit ermöglicht und die Produkte in höheren Ausbeute liefert.

Bevorzugt sollte mit diesem Verfahren die Herstellung von nanoskaligen Partikeln mit Partikelgrößen kleiner als 20 nm möglich sein. Die erhaltenen Partikel sollten bevorzugt gut in flüssigen Medien dispergierbar sein, um die Herstellung kolloidal-stabile Sole zu ermöglichen. Ganz besonders bevorzugt ermöglicht das erfindungsgemäße Verfahren die Herstellung leicht alkalischer Sole mit einem pH-Wert von 7 bis 10. Weiterhin lässt das erfindungsgemäße Verfahren bevorzugt eine problemlose Überführung von einem Labor- auf einen Produktionsma8stab zu. Die Herstellung solcher Partikel mit enger Partikelgrößenverteilung und oder die Möglichkeit zur Variation der Partikelgrößen durch Modifikation der Verfahrensbedingungen wären vorteilhaft.

Die Aufgabe der Erfindung wurde überraschenderweise mittels eines Verfahrens gelöst, bei dem in Gegenwart eines schwach basischen Fällungsmittels unter hydrothermalen Bedingungen Nano- oder Mikropartikel von Seltenerd- oder anderen Übergangsmetallverbindungen gefällt werden.

Gegenstand der vorliegenden Erfindung ist somit ein Verfahren zur Herstellung von Mikro- oder Nanopartikeln von Seltenerd- oder anderen Übergangsmetallverbindungen durch die homogene Fällung dieser Partikel aus einer Metallsalzlösung wenigstens eines der entsprechenden Seltenerd-oder Übergangsmetalle mit Hilfe eines oder mehreren Fällungsreagenzen, dadurch gekennzeichnet, dass:
- als Fällungsreagenz eine oder mehrere in einem Lösemittel oder Lösemittelgemisch lösliche, bei der Verfahrenstemperatur stabilen, schwach-basische Verbindung(en) eingesetzt werden,
- und die Fällung unter hydrothermalen Bedingungen erfolgt.

Das erfindungsgemäße Verfahren weist vorzugsweise die folgenden Schritte auf:
- zunächst werden Metallsalze und Fällungsreagenzien in dem Lösemittel oder Lösemittelgemisch zusammengemischt und damit eine homogene Fällungsmischung hergestellt (Mischphase),
- anschließend wird die Temperatur der Fällungsmischung erhöht (Fällungsphase) und
- nach Abschluss der Fällung werden die erhaltenen Mikro- oder Nanopartikel gegebenenfalls nach Abkühlung ausgetragen.

Im Rahmen der vorliegenden Erfindung sind unter hydrothermalen Bedingungen Temperaturen von 80°C und höher sowie Drücke oberhalb Atmosphärenc3ruck (größer 1 atm) zu verstehen. Bevorzugt sind im Rahmen der Erfindung hydrothermale Bedingungen Temperaturen zwischen 80 und 500°C, besonders bevorzugt zwischen 90 und 300°C, ganz besonders bevorzugt zwischen 100 und 250°C und Drücke oberhalb von Atmosphärendruck. Durch die Temperaturerhöhung der homogenen Fällungsmischung in der Fällungsphase unter erhöhtem Druck wird die Fällung der Partikel induziert und/oder beschleunigt.

Unter homogener Fällung ist im Rahmen der Erfindung eine Fällung aus einer Lösung bzw. Dispersion zu verstehen, die nahezu keinen Konzentrationsgradienten hinsichtlich des Fällungsmittels aufweist. Dies kann beispielsweise durch Rühren oder anderweitiges homogenes Mischen des Fällungsmittels mit der Metallsalzlösung und gegebenenfalls weiteren Komponenten vor der Fällung erreicht werden.

Durch geeignete Wahl des Stoffsystems, d.h. der Metallsalzlösung und Fällungsmittel, und deren Konzentration sowie den Verfahrenspararrxetern (z.B. Verfahrenstemperatur, -druck, Dauer der Mischphase und Dauer der Fällungsphase) können mit dem erfindungsgemäßen Verfahren Mikro-oder Nanopartikel in sphärischer und nicht-spharischer Partikelmorphologie (z.B. Plättchen und Stäbchen) erzeugt werden, d.h. Partikelgröße und Partikelmorphologie modifiziert werden. Unter Mikropartikel sind im Rahmen der Erfindung auch Submikropartikel subsummiert. Bevorzugt werden mit dem erfindungsgemäßen Verfahren Nano- und Sub-Mikropartikel hergestellt. Besonders bevorzugt werden mit dem erfindungsgemäßen Verfahren Nanopartikel hergestellt.

Nanopartikel werden im Rahmen der Erfindung als Partikel definiert, die wenigstens in einer Raumdimension kleiner als 100 nm sind. Als Mikropartikel werden im Rahmen der Erfindung Partikel definiert, die in allen drei Dimensionen größer als 1 µm sind. Sub-Mikropartikel werden im Rahmen der Erfindung als Partikel definiert, die in allen drei Dimensionen größer als 100 nm und die in mindestens einer Dimension kleiner als 1 µm sind. Die Partikelgrößen werden entweder mittels Messung per Ultrazentrifuge bestimmt, wobei es sich um Volumendurchmessar handelt und die vorangehend genannten Zahlenwerte dem D₅₀-Wert entsprechen, d.h. 50 Gew.-% aller Teilchen einen solchen Wert unterhalb der angegebenen Größe aufweisen, oder mittels Transmissionselektronenmikroskopie bestimmt, wobei es sich um Zahlendurchmesser handelt und die genannten Zahlenwerte die anhand der Aufnahmen tatsächlich ausgemessenen Partikelgrößen bzw. tatsächlich ausgemessenen Minimal- oder Maximalpartikelgrößen darstellen. Bevorzugt ist die Messung mittels Elektronenmikroskopie.

Vorzugsweise wird die Dauer der Mischphase so eingestellt, dass die Bildung vom Metallsalzkeimen vor Beginn der Fällungsphase minimiert wird.

Unter Partikeln von Seltenerd- oder anderen Übergangsmetallverbindungen sind im Rahmen der Erfindung insbesondere solche von Seltenerd- oder anderen Übergangsmetalloxiden, -hydroxiden, basischen Carbonaten (d.h. Hydroxycarbonaten) sowie basischen Carboxylaten (wie z.B. Hydroxyacetaten, -Oxalaten, und -Citraten) zu verstehen, wobei die basischen Carbonate sowie basischen Carboxylate im Nachgang ebenfalls in die entsprechenden Hydroxide oder Oxide umgewandelt werden können. Daher werden die basischen Carbonate sowie basischen Carboxylate im Folgenden auch als Vorprodukte solcher Hydroxide oder Oxide bezeichnet. Bevorzugt werden mit dem erfindungsgemäßen Verfahren als Seltenerd- oder anderen Übergangsmetallverbindungen direkt oder indirekt, d.h. über die nachträgliche Zersetzung der Vorprodukte, die Oxide oder Hydroxide hergestellt. Dabei können solche Verbindungen eines oder mehrere Metalle ausgewählt aus der Reihe der Seltenerd- oder anderen Übergangsmetalle enthalten. Im Falle mehrerer solcher Metalle kann es sich auch lediglich um eine Dotierung, d.h. eine Anwesenheit in deutlich kleineren Mengen als der Menge des anderen Metalls, handeln. mit einem

Bei Erhalt von nanoskaligen Vorprodukten von oxidischen Partikeln können die isolierten Nanopartikel beispielsweise durch Kalzinierung in die oxidische Phase überführt werden. Eine weitere Möglichkeit besteht darin, diese Überführung in einem organischen Lösemittel bei erhöhter Temperatur (bei Bedarf unter solvothermalen Bedingungen) und bei Erhalt der nanoskaligen Morphologie durchzuführen. Dazu ist zunächst ein Phasentransfer vom nanoskaligen Vorprodukt aus der wässrigen Phase in eine organische Phase erforderlich, wie z.B. durch Abdestillieren von Wasser aus der Fällungsmittel-haltigen Produktdispersion.

Zu den Seltenerdmetallen zählen im Rahmen dieser Erfindung bevorzugt die Elemente Scandium, Yttrium und Lanthan aus Gruppe 3 und alle Lanthanoide der Ordnungszahl 58 bis 71, d.h. Ce, Pr, Nd, Pm, Sm, Eu, Gd, Tb, Dy, Ho, Er, Tm, Yb, Lu. Zu den anderen Übergangsmetallen zählen im Rahmen der Erfindung vorzugsweise solche aus den Gruppen -4, 5, 6, 7, 8, 9, 10, 11, 12 und 14 aus dem Langperiodensystem nach IUPAC (3 Oktober 2005). Bevorzugte andere Übergangsmetalle sind Ni, Ag, Nb, Ta, besonders bevorzugt sind Nb und Ta.

Bei Metallsalzlösungen dieser Metalle handelt es sich im Rahmen der Erfindung vorzugsweise um Lösungen entsprechender Metallsalze mit einwertigen Anionen. Beispielhaft seien hierfür Lösungen der entsprechenden Halogenide, bevorzugt der Chloride, Carbonsäuresalze, bevorzugt Acetate, Oxalate oder Zitrate, oder Nitrate genannt.

Die Fällung kann aus einer oder mehreren Eduktlösungen erfolgen. Wird nur eine Eduktlösung verwendet, werden der Metallsalz und der Fällungsreagenz in dem Lösemittel oder Lösemittelgemisch in einer Fällungsmischung homogen zusammengemischt. Vorzugsweise besteht die Fällungsmischung aus mindestens zwei zusammen gemischten Eduktlösungen, wobei eine der Eduktlösungen eine Metallsalzlösung ist und eine weitere Eduktlösung ein oder mehrere Fällungsreagenzen enthält. Metallsalzlösung und Fällungsreagenzlösung werden in diesem Fall gleichzeitig oder nacheinander, vorzugsweise gleichzeitig, zusammengefügt und homogen gemischt.

Homogen gemischt werden die Eduktlösungen bzw. die Fällungsmischung beispielsweise durch intensives Rühren oder sonstige dem Fachmann bekannte Verfahren.

Als Lösemittel geeignet sind wässrige oder organische Lösemittel, bevorzugt polare Lösemittel wie z.B. Wasser, primäre, sekundäre und tertiäre Alkohole, wie z.B. Methanol, Ethanol, 2-Propanol, Propandiole, Butanol, Trimethylolpropane, Diacetonalkohol, Monoethylenglykol,

Diethylenglykol, Triethylenglycol, Polyethylenglykole, 1-Methoxy-2-Propanol, 2-Amino-2Methyl-1-Propanol, Glycerin, Ketone oder Aldehyde, wie z.B. Aceton, Acetylaceton, Acetaldehyd, Ether, wie z.B. Tetrahydrofuran, Amide, wie z.B. Dimethylformamid, Sulfoxide, wie z.B. Dimethylsulfoxid, Amine, wie z.B. Ethanolamin, Diethanolamin, Dimethylethanolamin und Triethanolamin oder Mischungen enthaltend eines oder mehrere dieser Lösemittel. Besonders bevorzugte Lösemittel sind Wasser oder Wasser enthaltende Lösemittelgemische. Gegebenenfalls können Fällungsmittel und Lösungsmittel identisch sein.

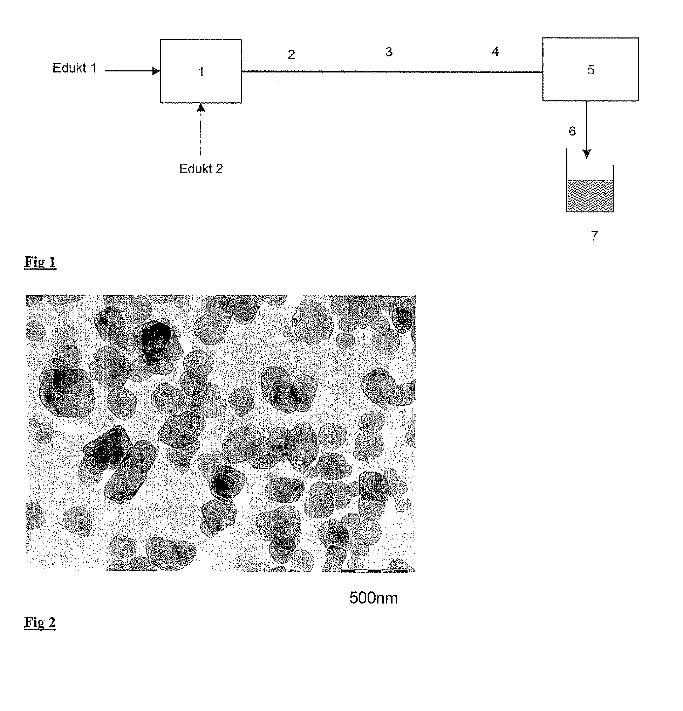

Die Konzentration der Metallsalzlösung ist zweckmäßigerweise zwischen 0,001 und 2,0 mol/l, bevorzugt zwischen 0,01 und 1,0 mol/l, und insbesondere zwischen 0,1 und 0,5 mol/l. Eine solche Metallsalzlösung ist beispielsweise die Eduktlösung 1 gemäß Fig. 1 (Edukt 1).

Die Konzentration des Metallsalzes in der Fällungsmischung beträgt zweckmäßigerweise von 0,0005 und 1,0 mol/l, bevorzugt zwischen 0,005 und 0,5 mol/l, und insbesondere zwischen 0,05 und 0,25 mol/l.

Als Fällungsreagenzien können im erfindungsgemäßen Verfahren eine oder mehrere in dem verwendeten Lösemitteln oder Lösemittelgemisch lösliche, bevorzugt wasserlösliche, bei der Verfahrenstemperatur stabile, schwach-basische Verbindungen eingesetzt werden. Besonders geeignet sind solche schwach-basischen Verbindungen, bei deren Einsatz während der Mischphase die Bildung von Metallsalzkeimen in der Eduktmischung bzw. der homogenen Fällungsmischung minimal oder zumindest nicht signifikant ist.

Unter schwach-basischen Verbindungen sind im Rahmen der Erfindung solche mit einem pK_{B}-Wert von 3,0 bis 11,0, bevorzugt von 4,0 bis 7,0 zu verstehen.

Als schwach-basische Fällungsreagenzien werden bevorzugt primäre, sekundäre oder tertiäre Amine und Aminoalkohole eingesetzt. Besonders bevorzugt sind Ammoniak, ,Triethanolamin Diethylentriamin, Ethylendiamin, Trimethylendiamin, Triethylentetramin, Trimethylamin, Triethylamin, tertiär-Butylamin, n-Butylamin, Di-n-propylamin, Tri-n-propylamin, Triisopropanolamin, 2-Aminoethanol, Anilin, Benzylamin, tris(hydroxymethyl)aminomethane, 2-Amino-2-methyl-1-propanol, Ethyldiisopropylamin, Dimethyleyclohexylamin, 2-(Methylamino)-ethanol 2-(Dirnethylamino)ethanol, Diisopropylamin , Hydroxylamin, 2-Amino-2-(hydroxymethyl)-1,3-propandiol (Tris), ganz besonders bevorzugt sind Ethanolamin, Diethanolamin und Triethanolamin.

Es wurde überraschend gefunden, dass schwach-basische Substanzen, die bei Raumtemperatur nicht oder nur zu einer langsamen Fällung von Verbindungen gelöster Metallionen fuhren, unter hydrothermalen Bedingungen, insbesondere bei erhöhter Temperatur erfolgreich als homogene Fällungsreagenzien eingesetzt werden können. Die erfindungsgemäße Fällungsreaktion unterscheidet sich von den bekannten hydrothermalen Batch-Verfahren unter Einsatz von Aminen dadurch, dass im Stand der Technik der gleichzeitige Einsatz von starken Basen wie z.B. Kalilaugen beschrieben wird. Die erfindungsgemäße hydrothermale Fällungsreaktion unterscheidet sich von den bekannten hydrothermalen kontinuierlichen Verfahren (US 5652192 A und WO 94/01361 A) u.a. dadurch, dass keine Substanzen, die sich bei thermischer Belastung zersetzen und somit Fällungsreagenzien homogen freisetzen, eingesetzt werden. Dadurch wird verhindert, dass die Nebenprodukte bei dieser thermischen Zersetzung beispielsweise zur Verstopfung der Reaktoren beitragen. Zudem können die erfindungsgemäß verwendeten schwach-basischen Fällungsreagenzien die erhaltenen Partikel zusätzlich stabilisieren und unkontrollierte Agglomeration beispielsweise in daraus hergestellten Solen verhindern.

Die Konzentration der Fällungsreagenzlösung beträgt zweckmäßigerweise von 0,01 bis 10 mol/l, bevorzugt von 0,1 bis 10,0 mol/l, und insbesondere von 0,1 bis 5,0 mol/l. Eine solche Fällungsreagenzlösung ist beispielsweise die Eduktlösung 2 gemäß Fig. 1 (Edukt 2).

Die Konzentration des Fällungsreagenz in der Fällungsmischung beträgt zweckmäßigerweise von 0,005 bis 5 mol/1, bevorzugt von 0,05 bis 5,0 mol/1, und insbesondere von 0,05 bis 2,5 mol/1.

Bevorzugt werden lagerstabile Eduktlösungen eingesetzt. Optional können chemisch- oder physikalisch instabile flüssige Eduktlösungen, wie z.B. bereits vorgemischte Eduktlösung enthaltend Metallsalz und Fällungsmittel, eingesetzt werden. Gegebenenfalls kann die Verweilzeit zwischen dem Ansetzen der Eduktlösungen und Durchführung des Verfahrens kontrolliert und/oder gezielt eingestellt werden.

Gegebenenfalls können den Eduktlösungen lösliche Substanzen wie z.B. niedermolekulare Additive, Salze, Tenside, Polymere, Dispergierhilfsmittel und Komplexbildner zugesetzt werden.

Durch Zusatz solcher Additive und/oder wasser-löslichen Lösemitteln kann eine gezielte Koagulation der Nanopartikel induziert werden, um damit die Fest-Flüssig-Trennung wesentlich zu vereinfachen. Bei Auswahl geeigneter Koagulationsbedingungen ist die Koagulation reversibel, so dass die agglomerierten Partikel durch Aufnahme in Wasser oder Lösemittel eventuell unter Eintrag von Energie redispergiert werden können.

Bevorzugt ist die Eduktlösung oder die Fällungsmischung aus mehreren Eduktlösungen unter Prozessbedingungen ein einphasiges und flüssiges System.

Das erfindungsgemäße Verfahren kann sowohl batchweise als auch kontinuierlich betrieben werden. Bevorzugt ist dabei die kontinuierliche Verfahrensführung.

Mit dem erfindungsgemäßen Verfahren können weiterhin die entsprechenden Sole der Nano- oder Mikropartikel von Seltenerd- oder anderen Übergangsmetallverbindungen hergestellt werden.

Ein Sol ist im Rahmen der Erfindung eine Dispersion von Nano- oder Mikronpartikeln, bevorzugt Nano- oder Sub-Mikropartikel in einer Flüssigkeit. Bevorzugt können dies hoch-konzentrierte transparente Sole sein. Als Flüssigkeiten kommen im Rahmen der Erfindung die vorangehend bereits genannten Lösemittel oder Lösemittelgemische in Frage. Je nach Menge des Lösemittels ist es auch möglich nach dem erfindungsgemäßen Verfahren zu Pasten oder strukturviskosen Flüssigkeiten enthaltend Nano- oder Mikronpartikeln, bevorzugt Nano- oder Sub-Mikropartikel zu gelangen. Ganz besonders bevorzugt sind Sole enthaltend Nanopartikel.

Das Sol kann erfindungsgemäß direkt durch Austragung der Partikel in einem entsprechenden Lösemittel oder Lösemittelgemisch erhalten oder durch nachträgliches Redispergieren der erhaltenen Partikel in einem entsprechenden Lösemittel oder Lösemittelgemisch hergestellt werden.

Durch einen Waschschritt oder durch einen Zusatz von Additiven kann auch gegebenenfalls die kolloid-chemische Stabilität der Partikel in den Solen optimiert werden.

Das erfindungsgemäße Verfahren kann weiterhin zur Beschichtung anorganischer Mikro- oder Nanopartikeln mit Verbindungen von Selenerd- oder anderen Übergangsmetallen diesen.

Ein weiterer Gegenstand der vorliegenden Erfindung ist somit ein Verfahren gemäß vorangehend beschriebenem erfindungsgemäßem Verfahren zur Herstellung von mit Seltenerd- oder anderen Übergangsmetallverbindugen beschichteten anorganischen Mikro- oder Nanopartikeln durch homogene Fällung aus einer Metallsalzlösung wenigstens eines der entsprechenden Seltenerd-oder Übergangsmetalle mit Hilfe eines oder mehreren Fällungsreagenz(ien), dadurch gekennzeichnet, dass die Beschichtung aus einer homogenisierten Fällungsmischung aus zwei oder mehreren Eduktlösungen erfolgt, wobei eine der Eduktlösungen eine Metallsalzlösung ist und die zweite Eduktlösung anorganische Mikro- oder Nanopartikel enthält, der entweder zusammen mit einer der beiden Eduktlösungen oder mit einer weiteren Eduktlösung das Fällungsmittel zugesetzt wird.

Als mögliche anorganische Nano- oder Mikropartikel, vorzugsweise Nanopartikel, werden anorganische Oxide oder Hydroxide eingesetzt. Dies sind beispielsweise SiO₂, Al₂O₃, TiO₂, ZrO₂ oder Seltenerdoxide vorzugsweise mit bekannter, definierter Partikelgrößenverteilung.

Für das Verfahren zur Beschichtung gelten die vorangehend aufgeführten Verfahrensparameter, Angaben zu Fällungsmittel, Metallverbindungen, Lösemittel, Konzentrationen etc. und deren Vorzugsbereiehe gleichermaßen.

Bei der kontinuierlichen Produktion von Mikro- und Nanopartikeln über nasschemische und homogene Fällungsverfahren gemäß den vorangehend beschriebenen erfindungsgemäßen Verfahren ist der Einsatz von Mischeinheiten, im vorliegenden Fall insbesondere zur Erzeugung der homogenen Fällungsmischung, erforderlich. Als Mischeinheit können unter anderem Mikroreaktoren und Dispergierdüsen bzw. Düsenreaktoren eingesetzt werden.

Die verwendete Bezeichnung "Mikroreaktor" steht dabei stellvertretend für miniaturisierte, vorzugsweise kontinuierliche arbeitende Reaktoren, die unter der Bezeichnung Mikroreaktor, Minireaktor, Mikromischer oder Minimischer bekannt sind. Beispiele sind T- und Y-Mischer sowie die Mikromischer verschiedenster Firmen (z.B. Ehrfeld Mikrotechnik BTS GmbH, Institut für Mikrotechnik Mainz GmbH, Siemens AG, CPC-Cellulare Process Chemistry Systems GmbH). Beispiele von Düsenreaktoren sind der MicroJetReactor (Synthesechemie GmbH) und der Strahldispergator (Bayer Technology Services GmbH).

Bevorzugt ist die Durchführung der erfindungsgemäßen Verfahren als Mikroverfahren in einen Kapillarsystem enthaltend einen oder mehrere Mikromischer (1), Verweiler (2), Reaktor (3), Kühler (4) und Druckventil (5). Besonders bevorzugt werden dabei die Eduktlösungen über Hochdruckpumpen, bspw. HPLC-Pumpen, mit konstanter Flussrate durch die Anlage bzw. durch das Kapillarsystem gepumpt. Über das Druckventil (5) nach dem Kühler wird die Flüssigkeit entspannt und über eine Austrittskapillare (6) in einem Produktbehälter (7) gesammelt (Fig. 1).

Zur Durchführung im kontinuierlichen Betrieb werden manche verfahrenstechnische Parameter wie z.B. die Dimensionierung der Kapillare (Länge, Durchmesser) und Auswahl des Mischers festgelegt, andere wie z.B. Temperatur, Volumenflussraten und Druck können während der Durchführung des erfindungsgemäßen Verfahrens gezielt eingestellt werden. Somit werden auch die mittleren Verweilzeiten in der Anlage kontrolliert.

Der Mischer ist vorzugsweise ein Mikromischer mit einer Mischzeit kleiner als 10 s, bevorzugt kleiner als 5 s, und insbesondere kleiner als 0,5 s.

Üblicherweise werden Kapillaren oder Kapillarsysterne als Verweiler, Reaktor und Kühler eingesetzt.

Die effektiven Kapillardurchmesser des Verweilers, des Reaktors und des Kühlers beträgt üblicherweise von 0,05 mm bis 20 mm, bevorzugt von 0,1 mm bis 10 mm, und insbesondere von 0,5 bis 5 mm.

Die Länge des Verweilers, des Kapillarreaktors und des Kühlers beträgt üblicherweise von 0,05 bis 10 m, bevorzugt von 0,05 bis 5 m, und insbesondere von 0, 1 bis 0,5 m.

Die Temperatur des Verweilers beträgt zweckmäßigerweise von 0 °C bis 100 °C, bevorzugt von 0 °C bis 50°C, und insbesondere von 0 °C bis 30 °C.

Die Temperatur des Kühlers beträgt zweckmäßigerweise von 0 °C bis 50 °C, bevorzugt von 0 °C bis 20 °C, und insbesondere von 0 °C bis 10°C.

Die Temperatur des Kapillarreaktors beträgt zweckmäßigerweise von 50 °C bis 500 °C, bevorzugt von 80°C bis 500°C, ganz besonders bevorzugt von 90 °C bis 300 °C, und insbesondere von 100 °C bis 250°C.

Die Flussraten der Eduktströme betragen zweckmäßigerweise von 0,05 ml/min bis 5 1/min, bevorzugt von 0,05 ml/min bis 250 ml/min, und insbesondere von 1,0 bis 100 ml/min.

Bevorzugt werden die Eduktlösungen über Hochdruckpumpen mit konstanter Flussrate und gezielt eingestelltem Druck durch die Anlage bzw. durch das Kapillarsystem gepumpt.

Der Druck im Kapillarsystem beträgt zweckmäßigerweise von 1 bis 500 bar, besonders bevorzugt von 50 bar bis 300 bar, und insbesondere von 75 bar bis 200 bar. Bevorzugt wird der Druck so eingestellt, dass unter Prozessbedingungen in Abhängigkeit der Reaktionstemperatur ein einphasiges und flüssiges System im Kapillarreaktor vorliegt.

Das erfindungsgemäße hydrothermale Verfahren unterscheidet sich von den bekannten hydrothermalen kontinuierlichen Verfahren gemäß US-A 5652192 und WO-A 94/01361 unter anderem dadurch, dass gemäß erfindungsgemäßem Verfahren zwei verfahrenstechnische Schritte, d.h.
- die Mischung der Edukte im Mikromischer (1) und
- das Verweilen der Eduktmischung im Verweiler (2),
zusätzlich erfolgen. Diese zusätzlichen Schritte verhindern eine unkontrollierte Keimbildung bereits vor der Fällung. Beide verfahrenstechnischen Schritte werden daher unter kontrollierten insbesondere unter thermostatisierten Bedingungen, d.h. insbesondere unter definierter Temperatur, durchgeführt. Die Dimensionierung des Verweilers bestimmt, bei gegebener Flussrate, die mittlere Verweilzeit der Eduktmischung im Verweiler. Durch die Einstellung der Verweilzeit kann die Größe der Partikel kontrolliert werden.

Zur Herstellung von Nanopartikeln werden üblicherweise die Eduktlösungen unmittelbar vor dem beheiztem Kapillarreaktor gemischt, d.h. die Verweilzeit im Verweiler (2) wird auf einen solchen Wert eingestellt, dass die Durchmischung und damit die Homogenität der Fällungsmischung optimiert und gleichzeitig die Bildung von Metallsalzkeimen minimiert wird.

Im kontinuierlichen Betrieb beträgt die mittlere Verweilzeit der Flüssigkeit im Kapillarreaktor maximal 5 Minuten, bevorzugt unter eine Minute, besonders bevorzugt von 0,1 s bis 5 s.

Das erfindungsgemäße Verfahren zeichnet sich im Vergleich zu den bekannten kontinuierlichen Hydrothermalverfahren unter anderem durch
- eine überraschend hohe Reaktionsausbeute üblicherweise über 60 % bevorzugt über 70 % gegenüber etwa 40 % und weniger gemäß Stand der Technik und
- eine stabile Fahrweise mit einer überraschend hohen Standzeit, üblicherweise um mindestens einen Faktor 10 vorzugsweise um mindestens einen Faktor 20
aus.

Darüber hinaus können zudem - im Gegensatz zu den bekannten kontinuierlichen Hydrothermalverfahren - überraschenderweise kolloidal- und chemisch-stabile Sole von nanoskaligen und (sub-)mikroskaligen Partikeln unterschiedlicher Morphologie, z.B. Kugeln, Stäbchen und Plättchen je nach Stoffsystem und Verfahrensführung, hergestellt werden.

Die nach dem Verfahren erhältlichen Sole sind leicht alkalisch und weisen bevorzugt einen pH-Wert von 7 bis 12, besonders bevorzugt einen pH-Wert von 7 bis 10 auf.

Zur Entfernung von in der Produktdispersion gelösten Begleitstoffen und/oder Salzen und zur Aufkonzentrierung der Dispersion können die gängigen Verfahren der mechanischen Flüssigkeitsabtrennung (wie z.B. die Filtration am Druckfilter oder im Zentrifugalfeld oder die Sedimentation im Erdschwere- oder Zentrifugalfeld), der Extraktion, der Membrantechnik (Dialyse) und der Destillation eingesetzt werden.

Zur Partikelcharakterisierung werden die Partikelgröße, die Partikelgrößenverteilung, und die Partikelmorphologie beispielsweise mittels Transmissionselektronenmikroskopie (TEM, Philips CM 20), die Partikelgröße, die Partikelgrößenverteilung weiterhin beispielsweise mittels Ultrazentrifugation (UZ). Die Methode der Ultrazentrifugation wurde von H.G. Müller beschrieben (Colloid and Polymer Science 267, 1113-1116, 1989;

Progress in Colloid and Polymer Science 107, 180-188, 1997). Zur Charakterisierung der Kristallinität der Partikel eignet sich beispielsweise die Röntgcndiffraktometrie (Reflexions-Diffraktometer D5000, Bruker AXS).

Die Ausbeute der Reaktion wird beispielsweise gravimetrisch, gegebenenfalls bei Bedarf nach Kalzinierung der isolierten Partikel bei 800 °C, bestimmt.

Zur Charakterisierung der chemischen Zusammensetzung der Partikel werden die Partikel mit einer gekoppelten Thermogravimetrie/Massenspektroskopieanlage (TG-MS) thermogmvimetrisch untersucht. Dazu werden die Partikel durch Zentrifugation isoliert und zunächst für eine definierte Zeit in der TG-MS-Anlage bei einer definierten Temperatur in einem Intergasstrom (Helium, 50 ml pro Minute) vorgetrocknet. Die Probe wird dann für 1 Stunde bei 100°C gehalten, dann mit einer Rampe von 5 K pro Minute auf 800°C erhitzt. Während des gesamten Messvorganges werden Massenspektren mit den Massen von 1-200 amu aufgenommen.

Das erfindungsgemäße Verfahren kann zur Herstellung von anorganischen, nanoskaligen und mikroskaligen, bevorzugt nanoskaligen und sub-mikroskaligen, besonders bevorzugt nanoskaligen Partikeln und deren Sole und Formulierungen z.B. für Pigmente, Katalysatoren, Beschichtungsmaterialien, dünne funktionelle Schichten, Materialien für die Elektronik, Elektrokeramik, Poliermittel, Materialien und Beschichtungen mit optischen wie z.B. hochbrechenden Eigenschaften, Stokes und anti-Stokes Phosphoren, Biolabel, Tinten, Halbleiter, Supraleiter, Materialien für Artti-Fälschungmethoden, Kunstoffkomposite, anti-mikrobielle Materialien und Wirkstoffformulierungen verwendet werden.

Insbesondere die nach dem erfindungsgemäßen Verfahren erhältlichen Nano- oder Mikopartikel von Niob- oder Tantalverbindungen sowie deren Sole sind im Stand der Technik bisher nicht beschrieben.

Weiterhin Gegenstand der vorliegenden Erfindung sind daher nach dem erfindungsgemäßen Verfahren erhältliche Nano- oder Mikopartikel enthaltend Niob- oder Tantalverbindungen, insbesondere Niob- oder Tantaloxide sowie deren Sole. Bevorzugt sind solche Nano- oder Mikopartikel aus Niob- oder Tantalverbindungen, insbesondere Niob- oder Tantaloxide sowie deren Sole.

Diese eignen sich besondere bevorzugt als Dotierungsmittel für keramische Vielschichtkondensatoren sowie für den Einsatz in Katalysatoren zur selektiven Oxidation.

### Fig.1: Schematische Darstellung des Verfahrens

Die Fig. 1 zeigt eine schematische Darstellung der Vorrichtung zur Durchführung des Verfahrens ohne sich darauf zu begrenzen.

Bezugzeichen:
1- Mischer
2- Verweiler
3- Beheizter Kapillarreaktor
4- Kühler
5- Druckventil
6- Austrittkapillare
7- Produktbehälter

### Fig2: Elelitronenmilcroskopische Aufnahme (TEM) der Nanopartikel gemäß Beispiel 2

Die nachfolgenden Beispiele sollen die vorliegende Erfindung illustrieren ohne sie jedoch einzuschränken.

### Beispiele

### Beispiel 1:

Es wurden yttriumhaltige Nanopartikel nach dem in Fig. 1 schematisch dargestellten Verfahren kontinuierlich hergestellt.

Die Zufuhrkapillare zu dem Mischer (1), dem Verweiler (2), dem Kapillarreaktor (3) und dem Kühler (4) bestanden aus Kapillarröhren mit einem inneren Durchmesser von 2,25 mm. Der Verweiler hatte eine Länge von 10 cm, der Kapillarreaktor eine Länge von 30 cm und der Kühler eine Länge von 100 cm. Der Mischer bestand aus einer T-Verschraubung der Firma Swagelok zwischen Zufuhrkapillare und Verweiler. Die nicht-temperierten Anlagenkomponenten Mischer (1) und Verweiler (2) befanden sich in Kontakt mit der atmosphärischen Luft. Der Kapillarreakor wurde durch Eintauchen von (3) in ein temperiertes Ölbad bei 235 °C temperiert. Der Kühler wurde durch Eintauchen von (4) in ein Thermostatbad bei 4 °C gehalten. Der Kapillarreaktor und Kühler waren durch eine 15 cm lange Kapillare mit einem inneren Durchmesser von 2,0 mm verbunden.

Es wurden eine 0,2 molare Lösung von Yttriumacetat (YAc₃) als Edukt 1 und eine 2,0 molare Lösung von Triethanolamin als Edukt 2 angesetzt. Als Lösernittel wurde demineralisiertes Wasser (aufbereitet mit Milli-Qplus, QPAK®2, Millipore Corporation) eingesetzt. Über Hochdruck-HPLC-Pumpcn mit Drucksensoren (Shimadzu LC-7 A) wurden beide Edukte aus Eduktbehältern bei Raumtemperatur mit einer konstanten Flußrate von jeweils 5 ml/min durch die Anlage gepumpt. Der Druck in der Anlage wurde am Anfang des Versuches durch Regelung des Druckventils (Überströmerventil R3A, Nupro Company) auf 100 bar eingestellt. Während des Versuches über einen Zeitraum von 3 h blieb der Druck konstant.

Als Produkt wurde ein kolloid-stabiles, leicht opaleszierendes und leicht alkalisches (pH-Wert 8,6) Sol mit nanoskaligen und sphärischen Partikeln erhalten. Die Partikcigrößenbcstimmung mittels Elektronenmikroskopie ergab amorphe Partikel mit einem Durchmesser zwischen 4 und 10 nm. Die Partikelgrößenbestimmung mittels Ultrazentrifuge zeigte einen mittleren Volumendurchmesser von D₅₀ = 16 nm.

Die Partikel wurden mittels Zentrifugation (Avanti J 30i, Rotor JA 30.50 Ti, Beckman Coulter GmbH) isoliert und zum Teil nach Vortrocknung bei 100°C anschließend 1 h bei 800°C in einem Ofen kalziniert. Die Strukturbestimmung mittels Röntgendiffraktometrie (Reflexions-Diffraldometer D5000, Bruker AXS) der kalzinierten Probe ergab eine Y₂O₃- oder eine Y₂O₃-ähnliche Struktur. Die nicht-kalzinierten Partikel wurden mittels Thermogravimetrie gekoppelt mit einer massenspektraznetrischer Detektion (Thermogravimetrische Waage TGAISDTA 851e, Mettler-Toledo; Quadrupol-Massenspektrometer Thermostar, Balzers) untersucht. Dazu wurden die Partikel durch Zentrifugation isoliert und zunächst eine definierter Zeit in der TG-MS-Anlage bei einer definierter Temperatur in einem Intergasstrom (Helium, 50 ml pro Minute) vorgetrocknet. Die Probe wurde dann für 1 Stunde bei 100°C gehalten, dann mit einer Rampe von 5 K pro Minute auf 800°C erhitzt. Während des gesamten Messvorganges wurden Massenspektren aufgenommen. Die Ergebnisse ergab eine Yttriumhydroxycarbonat-ähnliche Struktur.

### Beispiel 2:

Es wurden yttriumhaltige Nanoplättchen analog Beispiel 1 hergestellt.

Es wurden eine 0,2 molare wässrige Lösung von Yttriumchlorid (YCl₃) als Edukt 1 und eine 0,2 molare wässrige Lösung von Triethanolamin als Edukt 2 angesetzt. Der Kapillarreaktor wurde auf 160 °C temperiert, beide Edukte wurden mit einer konstanten Flussrate von jeweils 2,5 ml/min durch die Anlage gepumpt. Während des Versuches über einen Zeitraum von 3 h blieb der Druck konstant. Nach Zentrifugation der opaleszierenden Produktdispersion wurde der klare Überstand mit demineralisiertem Wasser ausgetauscht. Anschließend wurde der sedimentierte Feststoff durch Rühren redispergiert, womit ein leicht opaleszierendes und kolloid-stabiles Sol erhalten wurde.

Die Untersuchung der Partikelgröße und -morphologie mittels Elektronenmikroskopie ergab plättchen-förmige Yttriumhydroxid-Partikel mit einem Durchmesser zwischen 200 und 500 nm und einer Dicke < 10 nm.

### Beispiel 3:

Es wurden yttrium- und europiumhaltige Nanopartikel als Vorprodukt von einem Y₂O₃:Eu Phosphor analog Beispiel 1 hergestellt.

Es wurden eine 0,2 molare wässrige Lösung von Yttriumacetat (YAc₃) mit 8 mM Europiumacetat als Edukt 1 und eine 2,0 molare wässrige Lösung von Triethanolamin als Edukt 2 angesetzt. Der Kapillarreaktor wurde auf 195°C temperiert, beide Edukte wurden mit einer konstanten Flussrate von jeweils 5 ml/min durch die Anlage gepumpt. Während des Versuches über einen Zeitraum von 3 h blieb der Druck konstant.

Als Produkt wurde ein kolloid-stabiles und leicht trübes Sol mit europium-dotierten Yttriumhydroxyacetat-Nanopartikel erhalten. Der Feststoffgehalt dieses Sols betrug 0,80 Gew.-% (bezogen auf Oxid im getrockneten wasserfreien Zustand). Die Ausbeute der Reaktion betrug mindestens 71 %.

Die Partikel wurden mittels Zentrifugation isoliert und (nach Vortrocknung bei 100 °C) anschließend 1 h bei 800 °C in einem Muffelofen kalziniert. Die kalzinierte Probe zeigt unter UV-Anregung (254 nm) eine intensive Fluoreszenz, was zeigt, dass die Partikel Europium-dotiert sind.

### Beispiel 4:

Es wurden dysprosium-haltige Nanopartikel analog Beispiel 1 hergestellt.

Es wurden eine 0,2 molare wässrige Lösung von Dysprosiumacetat (DyAc₃) als Edukt 1 und eine 2,0 molare wässrige Lösung von Triethanolamin als Edukt 2 angesetzt. Der Kapillarreaktor wurde auf 200 °G temperiert, beide Edukte wurden mit einer konstanten Flussrate von jeweils 10 ml/min durch die Anlage gepumpt.

Als Produkt wurde ein kolloid-stabiles und leicht opaleszierendes Sol mit nanoskaligen und sphärischen Partikeln und mit einem Feststoffgehalt von 1,36 Gew% (bezogen auf Oxid) erhalten.

Zur Aufkonzentrierung des Sols wurden die Partikel mittels Zentrifugation (Avanti J 30i, Rotor JA 30.50 Ti, Beckman Coulter GmbH) isoliert und in demineralisiertem Wasser redispergiert. Ein transparentes Sol mit dysprosium-haltigen Nanopartikeln (Dysprosiumhydroxyacetat) mit einem Feststoffgehalt von 12,0 Gew% (bezogen auf Oxid im getrockneten wasserfreien Zustand) wurde erhalten.

Die Partikelgrößenbestimmung mittels Elektronenmikroskopie ergab einen Durchmesser zwischen 5 und 10 nm. Die Partikelgrößenbestimmung mittels Ultrazentrifuge zeigten einen mittleren Volumendurchmesser von D₅₀ = 16 nm. Die Ausbeute der Reaktion betrug mindestens 73 %.

### Beispiel 5:

Es wurden dysprosium-haltige Nanopartikel analog Beispiel 4 hergestellt.

Es wurden eine 0,2 molare wässrige Lösung von Dysprosiumacetat (DyAc₃) als Edukt 1 und eine 2,0 molare wässrige Lösung von Triethanolamin als Edukt 2 angesetzt. Der Kapillarreaktor mit einer Länge von 15 cm wurde auf 120 °C temperiert, als Mischer wurde ein Multilamellenmischer (Kammmischer, Ehrfeld Mikrotechnik BTS GmbH) eingesetzt. Beide Edukte wurden mit einer konstanten Flussrate von jeweils 10 ml/min durch die Anlage gepumpt. Während des Versuches über einen Zeitraum von 3 h blieb der Druck konstant.

Als Produkt wurde ein transparentes Nanosol Dysprosiumhydroxyacetat-Nanopartikel) erhalten. Die Partikelgrößenbestimmung mittels Ultrazentrifuge zeigte einen mittleren Volumendurchmesser von D₅₀ = 5 nm.

### Beispiel 6:

Es wurden Cer-haltige Nanopartikel analog Beispiel 5 hergestellt.

Es wurden eine 0,2 molare wässrige Lösung von Cerchlorid (CeCl₃) als Edukt 1 und eine 0,2 molare wässrige Lösung von Triethanolamin als Edukt 2 angesetzt. Der Kapillarreaktor wurde auf 190 °C temperiert, beide Edukte wurden mit einer konstanten Flußrate von jeweils 10 ml/min durch die Anlage gepumpt.

Als Produkt wurde eine trübe und leicht gelbe Dispersion mit nanoskaligen Partikeln erhalten. Die Untersuchung der Partikelgröße und -Morphologie mittels Elektronenmikroskopie ergab stäbchenförmige CeO₂-Partikel mit einer Länge zwischen 50 und 200 nm und einem Aspektverhältnis zwischen 2 und 3.

### Beispiel 7:

Es wurden nickel-haltige Nanopartikel analog Beispiel 1 hergestellt.

Es wurden eine 0,2 molare wässrige Lösung von Nickelnitrat (Ni(NO₃)₂) als Edukt 1 und eine 2,0 molare wässrige Lösung von Triethanolamin als Edukt 2 angesetzt. Der Kapillarreaktor wurde auf 200 °C temperiert, beide Edukte wurden mit einer konstanten Flussrate von jeweils 2,5 ml/min durch die Anlage gepumpt.

Als Produkt wurde eine trübe und grüne Dispersion erhalten. Nach Zentrifugation der Produktdispersion wurde der klare Überstand mit demineralisiertem Wasser ausgetauscht. Anschließend wurde der sedimentierte Feststoff durch Rühren redispergiert, somit ein grünes aber transparentes und kolloid-stabiles Sol erhalten wurde.

Die Untersuchung der Partikelgröße und -Morphologie mittels Elektronenmikroskopie ergab sphärische Nickeldihydroxid-Nanopartikel mit einem Durchmesser zwischen 10 und 15 nm.

### Beispiel 8:

Es wurden silber-haltige Nanopartikel analog Beispiel 1 hergestellt.

Es wurden eine 0,2 molare wässrige Lösung von Silbernitrat (AgNO₃) als Edukt 1 und eine 2,0 molare wässrige Lösung von Triethanolamin mit 2 Gew% PVP K15 (Fluka) als Edukt 2 angesetzt. Der Kapillarreaktor wurde auf 120 °C temperiert, beide Edukte wurden mit einer konstanten Flussrate von jeweils 10 ml/min durch die Anlage gepumpt.

Als Produkt wurde eine grau-schwarze transparente Dispersion erhalten. Nach Zentrifugation der Produktdispersion wurde der klare Überstand mit demineralisiertem Wasser ausgetauscht. Anschließend wurde der sedimentierte Feststoff durch Rühren redispergiert, somit ein transparentes und kolloid-stabiles Sol erhalten wurde.

Die Untersuchung der Partikelgröße und -Morphologie mittels Elektronenmikroskopie ergab annäherungsweise sphärische Ag₂O-Nanopartikel mit einer breiten Partikelgrößenverteilung (Durchmesser zwischen 10 und 60 nm).

### Beispiel 9:

Es wurden niob-haltige Nanopartikel analog Beispiel 5 hergestellt.

Es wurden eine 0,2 molare wässrige Lösung von Ammoniumnioboxalat (H.C. Starck GmbH) als Edukt 1 und eine 2,0 molare wässrige Lösung von Triethanolamin als Edukt 2 angesetzt. Kapillarreaktor wurde auf 160 °C temperiert, beide Edukte wurden mit einer konstanten Flussrate von jeweils 10 ml/min durch die Anlage gepumpt. Während des Versuches über einen Zeitraum von 6 h blieb der Druck konstant.

Als Produkt wurde ein wasser-klares und leicht-alkalisches (pH-Wert 8,4) Sol mit nanoskaligen Partikeln erhalten. Zur Isolation und Aufkonzentrierung der Partikel wurden 100 Teile dieses Sols mit 40 Teile Aceton versetzt und, zur Fällung der Partikel, 24 ruhen gelassen. Anschließend wurde das nach Zentrifugation gebildete Sediment in 30 Teile Wasser aufgenommen und durch Eintrag von Ultraschall (Branson Digital Sonifier) redispergiert. Der Restgehalt des Acetons in diesem redispergierten Sol wurde mit einem Rotationsverdampfer bei 40 °C abgezogen. Nach Filtration über ein 450 nm Filter (Millex HV®, Millipore Corporation) wurde ein transparentes Sol mit niobhaltigen Nanopartikeln mit einem Feststoffgehalt von 7,5 Gew% erhalten.

Die Untersuchung der Partikelgröße und -Morphologie mittels Elektronenmikroskopie ergab amorphe Partikel mit einem Durchmesser zwischen 5 und 15 nm.

Die Partikel wurden mittels ESCA (Electron Spectroscopy for Chemical Analysis, Escalab 220 i-XL, Thermo VG Scientific) und EDX Energiedispersive Röntgenanalytik, Philips CM 20) untersucht. Die Untersuchungen ergab eine amorphe Nb₂O₅-Struktur.

### Beispiel 10:

Es wurden niob-haltige Nanopartikel analog Beispiel 5 hergestellt.

Es wurden eine 0,2 molare wässrige Lösung von Ammoniumnioboxalat (H.C. Starck GmbH) als Edukt 1 und eine 1,0 molare wässrige Lösung von Ethanolamin als Edukt 2 angesetzt. Kapillarreaktor wurde auf 180°C temperiert, beide Edukte wurden mit einer konstanten Flussrate von jeweils 20 ml/min durch die Anlage gepumpt.

Als Produkt wurde ein leicht opaleszierendes und leicht-alkalisches (pH-Wert 8,4) Sol mit nanoskaligen Partikeln erhalten. Zur Isolation der Partikel wurden dieses Sols dialysiert bis der pH auf 7,3 abgefallen ist. Anschließend wird das Sol im Rotationsverdampfer eingeengt.

Die Untersuchung der Partikelgröße und -Morphologie mittels Elektronenmilcroskopie ergab amorphe Partikel mit einem Durchmesser zwischen 5 und 15 nm.

Die Zusammensetzung der Partikel wurde mittels Thermogravimetie bestimmt. Die Untersuchungen ergab ein Nb₂O₅-Hydrat.

### Beispiel 11:

Es wurden niob-haltige Nanopartikel analog Beispiel 5 hergestellt.

Es wurden eine 0,2 molare wässrige Lösung von Ammoniumnioboxalat (H.C. Starck GmbH) als Edukt 1 und eine 1,0 molare wässrige Lösung von Diethanolamin als Edukt 2 angesetzt. Kapillarreaktor wurde auf 200 °C temperiert, beide Edukte wurden mit einer konstanten Flussrate von jeweils 20 ml/min durch die Anlage gepumpt.

Als Produkt wurde ein leicht opaleszierendes und leicht-alkalisches (pH-Wert 8,4) Sol mit nanoskaligen Partikeln erhalten. Zur Aufreinigung der Partikel wurden dieses Sols dialysiert bis der pH auf 7,5 abgefallen ist. Anschließend wird das Sol im Rotationsverdampfer eingeengt.

Die Untersuchung der Partikelgröße und -Morphologie mittels Elektronenmikroskopie ergab amorphe Partikel mit einem Durchmesser zwischen 5 und 15 nm.

Die Zusammensetzung der Partikel wurde mittels Thermogravimetie (MettlerToledo SDTA 851E) bestimmt. Die Untersuchungen ergab ein Nb₂O₅-Hydrat.

### Beispiel 12:

Es wurden tantal-haltige Nanopartikel analog Beispiel 5 hergestellt.

Zur Herstellung des Eduktes 1 wurde eine wässrige Tantaloxalatlösung (H.C. Starck GmbH) mit Wasser auf einer Tantalkonzentration von 0,2 mol/l verdünnt Als Edukt 2 wurde eine 2,0 molare wässrige Lösung von Triethanolamin als Edukt 2 angesetzt. Der Kapillarreaktor mit einer Länge von 45 cm wurde auf 160 °C temperiert. Beide Edukte wurden mit einer konstanten Flussrate von jeweils 10 ml/min durch die Anlage gepumpt. Während des Versuches über einen Zeitraum von 1 h blieb der Druck konstant.

Das Produkt aus dem Hydrothermalreaktor wurde über Dialyse (Dialysierschlauch Visking, Typ 36/32, Carl Roth GmbH&Co) gegen demineralisiertem Wasser aufbereitet. Ein transparentes und kolloid-chemisch stabiles Sol mit Ta₂O₅-Nanopartikel, mit einem Feststoffgehalt von 1,56 Gew% (bezogen auf Oxid im getrockneten wasserfreien Zustand) und einem pH-Wert von 7,5 wurde erhalten.

Die Untersuchung der Partikelgröße mittels dynamischer Lichtstreuung ergab Partikel mit einem effektiven hydrodynamischen Durchmesser von 78 nm (Intensitätsmittelwert) bzw. 21 nm (Anzahl-Mittelwert).

Die Ausbeute der Reaktion betrug mindestens 76 %.

### Vergleichsbeispiel:

Vergleichsbeispiel gemäß US 5652192 A und WO 94/01361 A.

Eine wässrige Lösung enthaltend 0,1 mol/l Yttriumchlorid (YCl₃) und 1,0 mol/l Harnstoff wurde als Eduktlösung angesetzt. Als Reaktionsanlage wurde die Anlage aus Beispiel 1 für die Fahrweise mit nur einer Eduktlösung modifiziert, d.h. durch Entfernung von Komponente 1 (der Mischer). Der Kapillarreaktor wurde auf 235 °C temperiert und die Eduktlösung wurde mit einer konstanten Flussrate von 10 ml/min durch die Anlage gepumpt. Der Druck in der Anlage wurde am Anfang des Versuches durch Regelung des Druckventils auf 100 bar eingestellt.

Während des Versuches über einen Zeitraum von 20 min stieg der Druck stetig bis zu einem Druck von 300 bar und mehr an, auf Grund der Versuch abgebrochen werden musste.

Als Produkt wurde eine kolloidal-instabile und trübe Dispersion mit einem pH-Wert von 5,5 und einem Feststoffgehalt von 10,0 g/l (nach Trockung bei 120°C) erhalten. Bei Lagerung über Nacht klärte die Dispersion durch Teilauflösung der gefällten Partikel auf.

Die Ausbeute der Reaktion betrug maximal 40%.

## Patentansprüche

1. Verfahren zur Herstellung von Mikro- oder Nanopartikeln von Seltenerd- oder anderen Übergangsmetallverbindungen durch die homogene Fällung dieser Partikel aus einer Metallsalzlösung wenigstens eines der entsprechenden Seltenerd- oder Übergangsmetalle mit Hilfe eines oder mehreren Fällungsreagenzen, **dadurch gekennzeichnet, dass** als Fällungsreagenz eine oder mehrere in einem Lösemittel oder Lösemittelgemisch lösliche, bei der Verfahrenstemperatur stabilen, schwach-basische Verbindung(en) eingesetzt werden und die Fällung unter hydrothermalen Bedingungen erfolgt.

2. Verfahren nach Anspruch einem der Ansprüche 1, **dadurch gekennzeichnet, dass** das Fällungsreagenz ein primäres, sekundäres oder tertiäres Amin, ein Aminoalkohol oder eine Mischung aus diesen ist.

3. Verfahren nach Anspruch 1 oder 2, **dadurch gekennzeichnet, dass**
- zunächst Metallsalze und Fällungsreagenzien in dem Lösemittel oder Lösemittelgemisch zusammengemischt und damit eine homogene Fällungsmischung hergestellt (Mischphase) werden,
- anschließend die Temperatur der Fällungsmischung erhöht (Fällungsphase) wird und
- nach Abschluss der Fällung die erhaltenen Mikro- oder Nanopartikel gegebenenfalls nach Abkühlung ausgetragen werden.

4. Verfahren nach Anspruch einem der Ansprüche 1 bis 3 **dadurch gekennzeichnet, dass** die Herstellung der homogenen Fällungsmischung durch Zusammenmischen wenigstens zweier Eduktlösungen erfolgt, wobei eine der Eduktlösungen eine Metallsalzlösung wenigstens eines der entsprechenden Seltenerd- oder Übergangsmetalle ist und eine weitere Eduktlösung ein oder mehrere Fällungsreagenzen enthält.

5. Verfahren nach einem der Ansprüche 1 bis 4, **dadurch gekennzeichnet, dass** die Dauer der Mischphase so eingestellt ist, dass die Bildung vom Metallsalzkeimen vor Beginn der Fällungsphase minimiert wird.

6. Verfahren nach einem der Ansprüche 1 bis 5, **dadurch gekennzeichnet, dass** das Verfahren kontinuierlich betrieben wird.

7. Verfahren nach Anspruch 6, **dadurch gekennzeichnet, dass** das kontinuierliche Verfahren in einem Kapillarsystem enthaltend ein oder mehrere Mikromischer (1), Verweiler (2), Reaktoren (3), Kühler (4) und Druckventile betrieben wird.

8. Verfahren nach Anspruch 7, **dadurch gekennzeichnet, dass** im kontinuierlichen Betrieb im Kapillarreaktor die Dauer der Mischphase zuzüglich der Dauer der Fällungsphase weniger als 5 Minuten beträgt.

9. Verfahren nach einem der Ansprüche 1 bis 8, **dadurch gekennzeichnet, dass** die Mikro-oder Nanopartikeln in Form eines Sols, bevorzugt in Form eines kolloidal-stahilen Sols, einer Paste oder einer struktur-viskosen Flüssigkeit erhalten wird.

10. Verfahren nach einem der Ansprüche 1 bis 9, **dadurch gekennzeichnet, dass** die Mikro-oder Nanopartikeln in Form eines Sols mit einem pH-Wert von 7 bis 12, bevorzugt von 7 bis 10 erhalten wird.

11. Verfahren nach einem der Ansprüche 1 bis 10 zur Herstellung von mit Seltenerd- oder anderen Übergangsmetallverbindugen beschichteten anorganischen Mikro- oder Nanopartikeln durch homogene Fällung aus einer Metallsalzlösung wenigstens eines der entsprechenden Seltenerd- oder Übergangsmetalle mit Hilfe eines oder mehrerer Fällungsreagenz(ien), **dadurch gekennzeichnet, dass** die Beschichtung aus einer homogenisierten Fällungsmischung aus zwei oder mehreren Eduktlösungen erfolgt, wobei eine der Eduktlösungen eine Metallsalzlösung ist und die zweite Eduktlösung anorganische Mikro- oder Nanopartikel enthält, und entweder zusammen mit einer der beiden Eduktlösungen oder mit einer weiteren Eduktlösung das Fällungsmittel zugesetzt wird.

12. Nano- oder Mikopartikel enthaltend Niob- oder Tantalverbindungen, bevorzugt Niob- oder Tantaloxide erhältlich nach einem Verfahren gemäß einem der Ansprüche 1 bis 11.

13. Sole enthaltend die Nano- oder Mikopartikel gemäß Anspruch 12.
